# EUROPEAN PATENT SPECIFICATION

(11) **EP 3 299 065 B1**
(45) Date of publication and mention of the grant of the patent: **03.07.2019**
(21) Application number: 17190777.7
(22) Date of filing: 13.09.2017
(51) Int. Cl.: A62C 2/06, A62C 37/50, F16L 5/04, F16L 55/10

(54) **FIRE STOP SYSTEM**
BRANDSCHUTZSYSTEM
SYSTÈME COUPE-FEU

(30) Priority: 21.09.2016 NL 2017502
(43) Date of publication of application: 28.03.2018
(73) Proprietor: J. van Walraven Holding B.V., 3641 RK Mijdrecht (NL)
(72) Inventor: NIJDAM, Frank, 3893 BA Zeewolde (NL); VERMEULEN, Constantinus Paulinus Johannes Maria, 3053 ZN Rotterdam (NL)
(74) Representative: EP&C

(56) References cited:
- WO-A1-2016/010420
- GB-A- 2 473 177

## Description

The present invention relates to a fire stop system. This fire stop system prevents fire to spread from a first room towards a second room, where the first and second room are separated by a partition, said partition comprising a passage for a pipe. The fire stop system comprises a fire stop collar to be arranged in the passage in the partition, the fire stop collar comprising intumescent material that is arranged, in use, around the outer wall of the pipe. The fire stop collar further comprises a casing, preferably made of metal, said casing being located, in use, around the intumescent material. The casing ensures that the intumescent material swells towards the radially inner side when a fire occurs.

WO2016/010420 shows a fire stop sleeve that is to be arranged around a duct, such as a plastic pipe that passes through a passage in a partition that separates two rooms. When this fire stop sleeve is mounted around the duct, intumescent material is arranged around the duct. A casing is arranged around the intumescent material. In case of a fire the intumescent material swells up due to the heat. The pressure of this swelling makes that the pipe collapses and is closed off for fire and smoke. The casing directs the pressure of the swelling material radially inwards. The fire stop sleeve thus seals off the penetrated wall in case of fire such that fire and smoke cannot spread to other rooms.

One of the disadvantages of currently known fire stop collars is that they need to be inspected visually to check, for example, if the fire stop collar is installed correctly. An inspector usually has to climb a ladder to reach the location of the fire stop collar, where he has to open a ceiling to be able to inspect the fire stop collar. He then has to repeat these steps for every next fire stop collar in the building.

The object of the present invention is to provide a fire stop system that is more easily inspected.

This object is achieved by providing a fire stop system according to the preamble of claim 1, wherein the fire stop system further comprises an electronic processing unit, integrated in the fire stop collar, and a display apparatus, remote from the fire stop collar, said electronic processing unit comprising a memory to store data about the fire stop system, said electronic processing unit and said display apparatus adapted to connect with each other, either wired or wireless, to transmit said data from the electronic processing unit to the display apparatus, wherein the display apparatus is adapted to display said data.

The fire stop system according to the invention allows to store data, such as type of fire stop collar, date of production, date of sale, producer, specifications of the fire stop system components, environmental parameters, inspection history including but not limited to timestamps and/or inspector identification, or any other kind of data relating to the origin or status of the fire stop collar. The electronic processing unit and the display apparatus are adapted to connect with each other, either wired or wireless, to transmit said data from the electronic processing unit to the display apparatus. The display apparatus is adapted to display the data, such that it is possible with the present fire stop system to inspect the fire stop collar without the need to be physically present within viewing range of the fire stop collar.

A practical advantage of the invention is that the length of the fire stop collar can be shorter than the width of the partition, such that the fire stop collar, in use, does not protrude with respect to either side of the partition. Some, if not most or all of the fire stop collars that are known in the art, protrude with respect to at least one side of the partition. This allows an inspector to physically check that it is installed correctly, for example by looking at a sticker or label that is arranged on the protruding end. When such a fire stop collar protrudes with respect to the partition, it is not possible for the pipe to make a tight bend at the edge of the passage and the partition: there is a distance between the pipe and the partition, corresponding to the amount of protrusion of the fire stop collar. The more such a fire stop collar protrudes, the further the pipe should be spaced from the partition. When the fire stop collar can now be inspected from a remote location, there is no longer a need for the fire stop collar to protrude with respect to the partition. When the fire stop collar does not protrude, the pipe can make a tighter bend around the partition, and space can be saved. This is an additional advantage of the presented invention.

In a preferred embodiment of the invention, the fire stop system further comprises at least one sensor to measure one or more parameters of either the environment, such as the temperature, the humidity, the amount of smoke, or the pressure and/or of the fire stop collar, such as the temperature and/or the humidity of the intumescent, the forming of rust on the casing material, mechanical stress and/or strain levels in the casing. The sensor and the electronic processing unit are adapted to be connected or to be connectable with each other, either wired or wireless, to transmit said measured parameters from the sensor to the electronic processing unit. The placement of such a sensor allows more data to be stored in the memory of the fire stop system and allows the inspector to not only check if the correct type of fire stop collar is arranged around the pipe, but to also check the status of the fire stop collar, for example the deterioration over time, without having to be within viewing range of the fire stop collar.

Preferably, there is a dual-way connection between the at least one sensor and the electronic processing unit: it is possible for the sensor to transmit measurements to the electronic processing unit, but it is also possible for the electronic processing unit to transmit data or a task to the sensor. The electronic processing unit could for example send a signal to a sensor to measure the humidity of the environment once in a certain time interval, say once every hour. This saves energy compared to a system where several sensors are making measurements continuously.

The at least one sensor can be integrated with the fire stop collar, but it is also possible that a sensor is attached to a partition or arranged inside the passage. It is also possible that there are multiple sensors, that are either placed at a similar location or that are placed at different locations. It could for example be possible to have at least one sensor arranged outside of the passage to make measurements of the environment of the fire stop collar, while also having at least one sensor integrated with the fire stop collar to make measurements of the intumescent material. It is also possible to integrate all sensors with the fire stop collar, for example on a (micro)controller that also comprises the electronic processing unit.

In a further preferred embodiment, the fire stop system includes a transmitter, remote from the fire stop collar, said transmitter being connectable, either wired or wireless, with the electronic processing unit to transmit data from the transmitter to the electronic processing unit, for example data relating to the last inspection, more particularly a date, a time, or an identification of an inspector. The transmitter could also be used to activate a certain setting, task or mode of the electronic processing unit, for example to put it in standby mode to save energy or to switch it on to perform a task.

Preferably, the transmitter and the display apparatus are combined into a single device, preferably a hand-held device, such as a mobile phone or a tablet, such that this device is able to transmit data to the electronic processing unit, and is also able to receive and display data from the electronic processing unit. This allows an inspector to go through the building and perform all his tasks with a single device, for example reading all relevant data of a particular fire stop collar and sending back his identification and a timestamp of inspection.

In a preferred embodiment, wherein the electronic processing unit of the fire stop system is able to perform operations on the data, such as making calculations or overwriting the data. That is however not necessary. This added functionality of the electronic processing unit makes the fire stop system 'intelligent': it is able to perform operations on the data, it is not only able to store and transmit data / measured parameters.

One could think of an embodiment where a microcontroller is integrated with the fire stop collar. This microcontroller then comprises the electronic processing unit and memory to store data on. The microcontroller may further comprise a communication unit to transmit and/or receive data/signals. The microcontroller may also comprise one or more sensors and/or an electronic control unit. The microcontroller could for example be programmed to process the stored data, to receive signals, to have different energy modes, or a combination of these.

In a preferred embodiment, the electronic processing unit is powered by a transducer, said transducer preferably being located in the vicinity of the fire stop collar. This transducer then also powers any other electronic components that are present near or integrated with the fire stop collar. A multitude of options is available to harvest energy for these electrical components by means of a transducer. One option would be to use a piezoelectric sensor to gather energy from changes in temperature, air pressure, or strain.

One could for example also use a photovoltaic cell to gather energy from light. In some of these options it would be preferable if the transducer is integrated with the fire stop collar; in other options it is preferable if the transducer is located outside of the fire stop collar. The transducer can be located anywhere, as long as it is able to transport the gathered electrical energy to the other electrical components of the fire stop collar, either by means of a wire, or wireless. The presence of a transducer ensures that the fire stop system virtually never runs out of power, without the need for substantial maintenance.

In an alternative embodiment, the electronic processing unit is powered by at least one battery. Preferably, the battery and the electronic processing unit are connected with a wire. The battery is preferably integrated with the fire stop collar, but the battery can also be located outside of the fire stop collar. This battery then also powers any other electronic components that are present. Further preferably, the battery is rechargeable. This is especially advantageous if the battery is integrated with the fire stop collar, as the battery can then be recharged without the need to remove the fire stop collar from the partition. Preferably, the batteries can be recharged from a location remote of the fire stop collar, where the energy to charge the battery is for example wirelessly sent from the charger to the rechargeable battery.

According to a preferred embodiment, the electronic processing unit and the display apparatus are connected via WIFI and/or Bluetooth. This allows an operator of the display apparatus to go through a building and inspect the different fire stop collars wirelessly by connecting with their electronic processing units.

Alternatively, the electronic processing unit and the display apparatus could be connected with a wire. For example, every fire stop collar could be connected to a display apparatus mounted on the partition, which display apparatus displays data related to the fire stop collar. Alternatively, several or all fire stop collars in a building could be connected to a single display apparatus, that is placed anywhere in the building. This display apparatus could then, for example, display a certain status if all signals of all fire stop collars are within their preferred range, and another status if not all data is within the preferred range. It could then for example indicate that a particular fire stop collar should be (physically) inspected.

According to a preferred embodiment, the data transmission between the electronic processing unit, and/or the display apparatus, and/or the transmitter is arranged via an Internet-based data storage recourse, for example a data cloud. In this embodiment, the electronic processing unit and/or the display apparatus and/or the transmitter are not directly linked, but each communicate with the Internet-based data storage recourse. The transmitter for example sends a signal to the Internet-based data storage resource, which signal is stored online and can be read by the electronic processing unit. This way, the inspector does not even have to be present in the building to check the fire stop collar. The inspector can retrieve the data from the Internet-based data storage resource from any location and check the status of the fire stop collar.

A combination of the two above described embodiments is also conceivable. In this embodiment, the electronic processing unit, for example, sends a signal to the Internet-based data storage resource. This signal can also be retrieved by, for example, the display apparatus. The display apparatus can however also connect with the Internet-based data storage resource to obtain data from the fire stop collar.

In a preferred embodiment, the casing of the fire stop collar is made of metal, said metal casing having a passage near the location of the electronic processing unit, to ensure that a continuous signal can be transmitted from elements of the fire stop system located inside the metal casing, through said passage, towards elements of the fire stop system located outside of the metal casing. When a metal casing is placed around the intumescent material, a Faraday cage arises. This Faraday cage makes it hard to send continuous signals from within the cage to outside of the cage. Therefore, it is advantageous to make a passage in the casing, to allow signals from the electronic processing unit to reach their destination.

The invention will be described in more detail in the following description with reference to the drawing, in which:

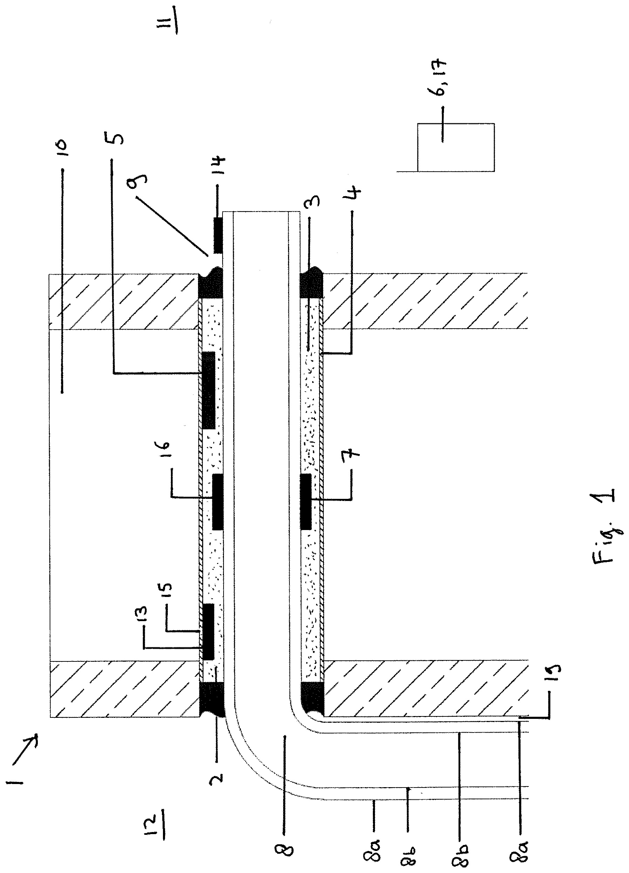

Figure 1 shows a longitudinal cross-section of the fire stop system, arranged around a pipe in a partition.

Figure 1 shows a fire stop system 1. The fire stop system comprises a fire stop collar 2, an electronic processing unit 5 and a display apparatus 6. The fire stop collar 2 in Figure 1 is arranged around a pipe 8, said pipe 8 being arranged in a passage 9 in a partition 10. The partition 10 separates two rooms 11, 12 from each other.

The fire stop collar 2 of the fire stop system comprises a casing 4 and one or more elements of intumescent material 3 contained within the casing 4. Intumescent material 3 has the property that it swells when heated and is known in the art. The fire stop collar 2 is arranged in the passage 9 of the partition 10, such that the intumescent material 3 is placed around an outer surface 8a of the pipe 8. When a fire occurs in either one of the rooms 11, 12, the intumescent material 3 is heated and swells. The casing 4 directs the swelling intumescent material 3 inwards. When the pipe 8 is made of a plastic material, the swelling intumescent material 3 ensures that the pipe 8 collapses, thereby sealing the passage 9 in the partition 10. This then prevents a fire and/or smoke to spread from one room 11, 12 to the other room 11, 12.

The casing 4 is positioned at the radially outer side of the intumescent material 3. The casing 4 is made of a strong material, preferably sheet metal material, such that it retains the intumescent material in it when it swells to close the passage 9.

Figure 1 shows the fire stop collar 2 in the way it is preferably used: arranged around a pipe 8. In use, the fire stop collar 2 is preferably substantially cylindrically shaped, although it might also possible to arrange the fire stop collar 2 around multiple pipes, such that the shape of the fire stop collar 2 becomes more oval or more rectangular. After production, the fire stop collar 2 may already have this cylindrical shape, but it is also conceivable that the fire stop collar 2 is produced in a substantially flat, flexible form and is to be wrapped around the pipe 8 to end up in the preferred shape of Figure 1.

In the embodiment of Figure 1, the electronic processing unit 5 of the fire stop system is integrated in the fire stop collar 2. In Figure 1 it is visible that the electronic processing unit 5 is located between the casing 4 and the intumescent material 3, at the radially inner side of the casing 4. This is however just an example. It is for example also possible to place the electronic processing unit 5 between the intumescent material 3 and the outer wall of the pipe 8, at the radially inner side of the intumescent material 3. It is also be possible to arrange the electronic processing unit 5 at the radially outer side of the casing 4, between the casing 4 and the partition 10.

The electronic processing unit 5 is for example a chip or a microcontroller, or another suitable electronic component. In a preferred embodiment, the electronic processing unit 5 is a microcontroller that may also contain other electronic components. The electronic processing unit 5 comprises a memory 7, such that the fire stop system of the invention allows to store data about the fire stop system. This data may for example be the type of fire stop collar, date of production, date of sale, producer, specifications of the fire stop system components, environmental parameters, inspection history, including but not limited to timestamps and/or inspector identification, or any other kind of data relating to the origin or status of the fire stop collar.

The electronic processing unit 5 is adapted to connect with the display apparatus 6, for example by arranging a communication unit 13 on the electronic processing unit 5. In the embodiment shown in Figure 1 however, the communication unit 13 is separate from the electronic processing unit 5, with a connection between the communication unit 13 and the electronic processing unit 5, for example a wired connection, such that the data stored in the memory 7 of the electronic processing unit 5 can be transmitted from the electronic processing unit 5 via the communication unit 13 to the display apparatus 6. The data transmission between the electronic processing unit 5 and the display apparatus 6 is preferably wireless, but a wired connection is also conceivable.

The display apparatus 6 of the fire stop system is located at a remote position from the fire stop collar 2. It could for example be mounted on the partition 10, but is could also be a hand-held apparatus. The display apparatus 6 is connectable to the electronic processing unit 5 and contains for example a receiver to receive the signals that are transmitted by the electronic processing unit 5. The display apparatus 6 is adapted to display the data that it receives from the electronic processing unit 5. A wireless connection between the electronic processing unit 5 and the display apparatus 6 is preferred, for example via WIFI or Bluetooth, but a wired connection between the electronic processing unit 5 and the display apparatus 6 is also possible. Another possibility to connect the electronic processing unit 5 and the display apparatus 6 is to transmit data via an Internet-based data storage resource, such as a data cloud. The electronic processing unit 5 then uploads data to the data cloud, for example once every day, once every hour, continuously, if it notices a change in one of the parameters outside a predefined range, or via another transmission scheme. The display apparatus 6 can also connect with this Internet-based data cloud to obtain the stored data. It is also possible that the data is displayed on the display apparatus 6 in a pro-active way. The Internet-based data cloud could for example send a notification to the display device 6 if it receives data from the electronic processing unit 5 that is outside of a predefined range.

If the electronic processing unit 5 and the display apparatus 6 are wirelessly connected, the display apparatus 6 may for example be a smartphone, a tablet, or another portable device that is adapted to receive the data transmitted by the electronic processing unit 5. If the display apparatus 6 is a smartphone or a tablet, it could have some dedicated software, for example an application, to make a connection between the display apparatus 6 and the electronic processing unit 5. This application is preferably adapted to visualize the received data on the display apparatus 6.

When the electronic processing unit 5 and the display apparatus 6 are wirelessly connected, there is a chance that the signal from the electronic processing unit 5 to the display apparatus 6 is disrupted when the electronic processing unit 5 is arranged inside the casing 4 of the fire stop collar 2 and when said casing 4 is made of metal. When such a construction is used, a Faraday cage results. Such a Faraday cage makes it difficult for electrical signals to be transmitted from inside the Faraday cage to outside the Faraday cage. It is therefore beneficial to provide a passage 15 in the metal casing 4, near the location of the electronic processing unit 5. In the embodiment of Figure 1 there is a dedicated communication unit 13 for the communication between the electronic processing unit 5 and the display apparatus 6. Therefore, Figure 1 shows this passage 15 near the communication unit 13. This passage 15 interrupts the Faraday cage and ensures that a signal can freely be transmitted from the electronic processing unit 5 inside the metal casing 4, or any other element of the fire stop system located inside the metal casing 4, through said passage 15, towards elements of the fire stop system located outside of the metal casing 4.

The display apparatus may also have a wired connection with the electronic processing unit 5. In that case, the display apparatus may for example be mounted on the partition 10. An inspector can then obtain the relevant data about the fire stop system by going to the location where the display apparatus 6 is mounted on the partition. It is also possible that the data of multiple fire stop collars in a building is displayed on a display apparatus 6, said display apparatus 6 being placed anywhere in the building. This display apparatus 6 could then, for example, display a certain status if all signals of all fire stop collars 2 are within their preferred range, and another status if not all data is within the preferred range. It could then for example indicate that a particular fire stop collar 2 should be (physically) inspected.

The use of a display apparatus 6 allows an inspector to inspect the fire stop collar 2 without being in visual range. Especially when the display apparatus 6 can be connected to the electronic processing unit 5 wirelessly this is a great benefit, as fire stop collars are often not readily visible and easily accessible. An inspector may need to climb stairs and/or open a ceiling before he or she can see a fire stop collar. The inspector has to do this for all fire stop collars in a particular building, repeating this procedure multiple times. When the inspector is now able to display data from the fire stop collar 2 on a display apparatus 6 by connecting the display apparatus 6 to the electronic processing unit 5 of the fire stop system, inspection is made more easy and fast.

In the embodiment of the fire stop system according to Figure 1, the fire stop collar 2 is shorter in length than the width of the partition 10. The fire stop collar 2, in other words, does not protrude with respect to the partition 10. This offers a particular advantage of the invention. As visible on the left-hand side of Figure 1, the pipe 8 can make a sharp bend where the passage 9 in the partition 10 ends and the second room 12 starts. This sharp bend of the pipe 8 allows a minimal spacing 19 to exist between an outer surface 8a of the pipe 8 and the partition 10 and leads to a smaller construction space. As the spacing 19 between the outer surface 8a of the pipe 8 and the partition 10 is minimized, the useful space in the second room 12 is maximized.

There are several different possibilities to power the electrical components of the fire stop system that are integrated with the fire stop collar 2. One option is to power them with a battery (not shown). This battery is preferably integrated with the fire stop collar 2, more preferably integrated with the electronic processing unit 5. There are however other possibilities for the placement of the battery: it could also be integrated with the fire stop collar 2 as a separate component, in a similar way as the electronic processing unit 5 is integrated with the fire stop collar 2. The battery could for example be arranged on the radially outer side of the casing 4 between the casing 4 and the partition 10, on the radially inner side of the casing 4 between the casing 4 and the intumescent material 3, or on the radially inner side of the intumescent material 3 between the intumescent material 3 and the outer wall 8a of the pipe 8. It is also possible to position the battery outside of the fire stop collar 2.

Preferably, such a battery is of the rechargeable type. It is nowadays possible to charge batteries wirelessly by locating an energy source near the battery. Especially when the battery is integrated with the fire stop collar 2, or when the battery is integrated with the electronic processing unit 5, it is convenient when the battery can be recharged from a distance, as there is then no need to de-install the fire stop system to change a battery. If the battery is however placed at a location where it is more convenient to change it, for example outside of the fire stop collar 2 mounted on the partition 10, it is also conceivable that a regular battery is used to power the electrical components of the fire stop system.

An alternative method to power the electrical components of the fire stop system is to use a transducer 14. The transducer 14 is preferably located in the vicinity of the fire stop collar 14, although this is not necessary. In the embodiment of Figure 1, the transducer 14 is located on the outer wall 8a of the pipe, just outside the passage 9 in the partition 10. A multitude of options is available to harvest energy and power the electrical components of the fire stop system with a transducer 14.

One option would be to use a piezoelectric sensor to gather energy from changes in temperature, air pressure, or strain. Another possibility is to use a photovoltaic cell to gather energy from light. For some types of transducer it is beneficial if the transducer 14 is integrated with the fire stop collar 2; for other types it is preferable if the transducer 14 is located outside of the fire stop collar 2. The transducer 14 can be located anywhere, as long as the transducer 14 is able to transport the gathered electrical energy to the other electrical components of the fire stop collar 2, either by means of a wire, or wirelessly. The presence of a transducer 14 ensures that the fire stop system virtually never runs out of power, without the need for substantial maintenance.

Further visible in the embodiment of Figure 1 is a sensor 16. In Figure 1, this sensor 16 is integrated with the fire stop collar 2, arranged between the outer surface 8a of the pipe 8 and the intumescent material 3. It is however also possible that the sensor 16 is placed at another location, for example on the partition 10, on a part of the pipe 8 that is arranged outside of the passage 9, or at the radially outer side of the casing 4. It is also possible that there is more than one sensor 16. These sensors 16 can be arranged near the same location, or they can be placed at different locations. One sensor 16 may for example be integrated with the fire stop collar 2, while another sensor may be located outside of the passage 9 in the partition 10.

The one or more sensors 16 measures one or more parameters of the environment and/or of the fire stop collar. The sensor(s) may for example measure the temperature, the humidity or the pressure of the environment. It may for example also measure the temperature and/or the humidity of the intumescent, the forming of rust on the casing material, mechanical stress and/or strain levels in the casing of the fire stop collar.

Besides the data that can be saved in the memory 7 during the production of the fire stop system, such as the production date, production location and type of fire stop collar, the placement of a sensor 16 allows more data to be stored in the memory 7 of the fire stop system, such as the above mentioned data. This additional data retrieved by the sensor 16 allows an inspector to not only check, for example, if the correct type of fire stop collar is installed around the pipe, but also to check the status of the fire stop collar 2, for example the deterioration over time, without having to be within viewing range of the fire stop collar 2.

The sensor 16 and the electronic processing unit 5 are adapted to be connected or to be connectable with each other, either wired or wirelessly, to transmit said measured parameters from the sensor 16 to the electronic processing unit 5. Preferably, this connection is also possible in the other direction, in other words, preferably it is also possible for the electronic processing unit 5 to transmit data or a task to the sensor 16. The connection may for example be made via WIFI, via Bluetooth, or via an Internet-based data resource, but may also be made via a wired connection. The electronic processing unit 5 could for example communicate a task to a sensor 16 to measure the humidity of the environment once in a certain time interval, say once every hour. Such a task may comprise the steps of switching on the sensor 16, making the measurement, send the value of the measurement from the sensor 16 to the electronic processing unit 5, and to switch the sensor 16 off. Such a routine, where the sensor 16 is switched once every certain time interval, saves energy compared to a system where several sensors 16 are measuring continuously.

Of course, it may be needed for some sensors to make continuous measurements. An embodiment may for example be possible where the intumescent material 3 can be preheated to swell faster if a temperature above a certain threshold value, for example above 333 K or above 353 K, is measured. In that case, it is beneficial if the temperature sensor makes continuous measurements.

Further visible in the embodiment of Figure 1 is a transmitter 17. This transmitter 17 is remote from the fire stop collar 2 and can be connected to the electronic processing unit 5, either wireless, such as via WIFI, Bluetooth or an Internet-based data storage resource, or via a wired connection. In Figure 1, the transmitter 17 is incorporated with the display apparatus 6 into a single device. Preferably, this combined transmitter 17 / display apparatus 6 is incorporated in a hand-held device, such as a mobile phone or a tablet. This device is able to transmit data to the electronic processing unit 5, and is also able to receive and display data from the electronic processing unit 5. This allows an inspector to go through a building and perform all his tasks with a single device, for example reading all relevant data of a particular fire stop collar 2 and sending back his identification and a timestamp of inspection. It is however not necessary that the transmitter 17 and the display apparatus 6 are combined into a single device. The transmitter 17 may for example also be mounted against the partition 10, or may be a separate device.

The use of a transmitter 17 allows the possibility to transmit data from the transmitter 17 to the electronic processing unit 5, for example data relating to the last inspection, more particularly a date, a time, or an identification of an inspector. The transmitter 17 could also be used to activate a certain setting, task or mode of the electronic processing unit 5, for example to put it in standby mode to save energy or to switch it on to perform a task.

It is well conceivable that the electronic processing unit 5 is configured and programmed to perform operations on the data, such as making calculations or overwriting the data, making the fire stop system 'intelligent'. With these functionalities added to the electronic processing unit 5 it is possible for the fire stop system to perform operations on the data, besides storing and transmitting data / measured parameters.

In this preferred embodiment, where a microcontroller is present, the microcontroller comprises the electronic processing unit 5 and memory 7 to store data on. The microcontroller may further comprise a communication unit 13 to transmit and/or receive data/signals. The microcontroller may also comprise one or more sensors 16. The microcontroller could for example be programmed to process the stored data, to receive signals, to have different energy modes, or a combination of these.

## Claims

1. A fire stop system (1) that prevents fire to spread from a first room (11) towards a second room (12), where the first and second room (11, 12) are separated by a partition (10), said partition (10) comprising a passage (9) for a pipe (8), the fire stop system (1) comprising a fire stop collar (2) to be arranged in the passage (9) in the partition (10), the fire stop collar (2) comprising intumescent material (3) that is arranged, in use, around the outer wall of the pipe (8), and the fire stop collar (2) comprising a casing (4), preferably made of metal, said casing (4) being located, in use, around the intumescent material (3), said casing (4) ensuring that the intumescent material (3) swells towards the radially inner side when a fire occurs, **characterised in that,** the fire stop system (1) further comprises an electronic processing unit (5), integrated in the fire stop collar (2), and a display apparatus (6), remote from the fire stop collar (2), said electronic processing unit (5) comprising a memory (7) to store data about the fire stop system (1), said electronic processing unit (5) and said display apparatus (6) adapted to connect with each other, either wired or wire-less, to transmit said data from the electronic processing unit (5) to the display apparatus (6), wherein the display apparatus (6) is adapted to display said data.

2. A fire stop system according to claim 1, wherein the fire stop system (1) further comprises at least one sensor (16) to measure one or more parameters of the environment and/or of the fire stop collar (2), such as the temperature, the humidity, or the pressure, said sensor (16) and said electronic processing unit (5) adapted to be connected or to be connectable with each other, either wired or wire-less, to transmit said measured parameters from the sensor (16) to the electronic processing unit (5).

3. A fire stop system according to claim 1 or 2, wherein the fire stop system (1) further includes a transmitter (17), remote from the fire stop collar (2), said transmitter (17) being connectable, either wired or wire-less, with the electronic processing unit (5) to transmit data from the transmitter (17) to the electronic processing unit (5), for example data relating to the last inspection, more particularly a date, a time, or an identification of an inspector.

4. A fire stop system according to claim 3, where the transmitter (17) and the display apparatus (6) are combined into a single device, preferably a hand-held device, such as a mobile phone or a tablet, such that this device is able to transmit data to the electronic processing unit (5), and is also able to receive and display data from the electronic processing unit (5).

5. A fire stop system according to claim 1, wherein the electronic processing unit (5) of the fire stop system (1) is able to perform operations on the data, such as making calculations or overwriting the data.

6. A fire stop system according to one of the preceding claims, wherein the electronic processing unit (5) is powered by a transducer (14), said transducer (14) preferably being located in the vicinity of the fire stop collar (2).

7. A fire stop system according to one of the claim 1-5, wherein the electronic processing unit (5) is powered by a battery, preferably by a rechargeable battery.

8. A fire stop system according to one of the preceding claims, wherein the electronic processing unit (5) and the display apparatus (6) are connected via WIFI and/or Bluetooth.

9. A fire stop system according to one of the preceding claims, wherein the data transmission between the electronic processing unit (5), and/or the display apparatus (6), and/or the transmitter (17) is arranged via an Internet-based data storage recourse, for example a data cloud.

10. A fire stop system according to one of the preceding claims, wherein the casing (4) of the fire stop collar (2) is made of metal, said metal casing (4) having a passage (15) near the location of the electronic processing unit (5), to ensure that a continuous signal can be transmitted from elements of the fire stop system located inside the metal casing (4), through said passage (15), towards elements of the fire stop system (1) located outside of the metal casing (4).

## Patentansprüche

1. Brandschutzsystem (1), das verhindert, dass sich ein Brand von einem ersten Raum (11) zu einem zweiten Raum (12) hin ausbreitet, wobei der erste und der zweite Raum (11, 12) durch eine Zwischenwand (10) getrennt sind und die Zwischenwand (10) einen Durchgang (9) für ein Rohr (8) umfasst, wobei das Brandschutzsystem (1) einen Brandschutzbund (2) umfasst, der in dem Durchgang (9) in der Zwischenwand (10) eingerichtet werden soll, wobei der Brandschutzbund (2) intumeszentes Material (3) umfasst, das bei Verwendung um die äußere Wand des Rohrs (8) eingerichtet ist, und wobei der Brandschutzbund (2) ein Gehäuse (4) umfasst, das vorzugsweise aus Metall gefertigt ist, wobei sich das Gehäuse (4) bei Verwendung um das intumeszente Material (3) befindet, wobei das Gehäuse (4) sicherstellt, dass das intumeszente Material (3) zu der radial inneren Seite anschwillt, wenn ein Brand auftritt, **dadurch gekennzeichnet, dass** das Brandschutzsystem (1) ferner eine elektronische Verarbeitungseinheit (5), die in dem Brandschutzbund (2) integriert ist, und eine Anzeigevorrichtung (6) umfasst, die von dem Brandschutzbund (2) entfernt ist, wobei die elektronische Verarbeitungseinheit (5) einen Speicher (7) umfasst, um Daten über das Brandschutzsystem (1) zu speichern, und die elektronische Verarbeitungseinheit (5) und die Anzeigevorrichtung (6) dazu angepasst sind, sich entweder drahtgebunden oder drahtlos miteinander zu verbinden, um die Daten von der elektronischen Verarbeitungseinheit (5) an die Anzeigevorrichtung (6) zu übertragen, wobei die Anzeigevorrichtung (6) dazu angepasst ist, die Daten anzuzeigen.

2. Brandschutzsystem nach Anspruch 1, wobei das Brandschutzsystem (1) ferner mindestens einen Sensor (16) umfasst, um einen oder mehrere Parameter der Umgebung und/oder des Brandschutzbunds (2), wie etwa die Temperatur, die Feuchtigkeit oder den Druck, zu messen, wobei der Sensor (16) und die elektronische Verarbeitungseinheit (5) dazu angepasst sind, entweder drahtgebunden oder drahtlos miteinander verbunden zu sein oder miteinander verbunden werden zu können, um die gemessenen Parameter von dem Sensor (16) an die elektronische Verarbeitungseinheit (5) zu übertragen.

3. Brandschutzsystem nach Anspruch 1 oder 2, wobei das Brandschutzsystem (1) ferner einen Transmitter (17) beinhaltet, der von dem Brandschutzbund (2) entfernt ist, wobei der Transmitter (17) entweder drahtgebunden oder drahtlos mit der elektronischen Verarbeitungseinheit (5) verbunden werden kann, um Daten von dem Transmitter (17), zum Beispiel Daten, die sich auf die letzte Inspektion beziehen, insbesondere ein Datum, eine Uhrzeit oder eine Identifikation eines Inspektors, an die elektronische Verarbeitungseinheit (5) zu übertragen.

4. Brandschutzsystem nach Anspruch 3, wobei der Transmitter (17) und die Anzeigevorrichtung (6) in einer einzelnen Vorrichtung, vorzugweise einer tragbaren Vorrichtung, wie etwa einem Mobiltelefon oder einem Tablet, kombiniert sind, sodass diese Vorrichtung dazu in der Lage ist, Daten an die elektronische Verarbeitungseinheit (5) zu übertragen, und auch dazu in der Lage ist, Daten von der elektronischen Verarbeitungseinheit (5) zu empfangen und anzuzeigen.

5. Brandschutzsystem nach Anspruch 1, wobei die elektronische Verarbeitungseinheit (5) des Brandschutzsystems (1) dazu in der Lage ist, Vorgänge an den Daten, wie etwa Vornehmen von Berechnungen oder Überschreiben der Daten, durchzuführen.

6. Brandschutzsystem nach einem der vorstehenden Ansprüche, wobei die elektronische Verarbeitungseinheit (5) durch einen Wandler (14) angetrieben wird, wobei sich der Wandler (14) vorzugsweise in der Nähe des Brandschutzbunds (2) befindet.

7. Brandschutzsystem nach einem der Ansprüche 1-5, wobei die elektronische Verarbeitungseinheit (5) durch eine Batterie, vorzugweise durch eine wiederaufladbare Batterie, angetrieben wird.

8. Brandschutzsystem nach einem der vorstehenden Ansprüche, wobei die elektronische Verarbeitungseinheit (5) und die Anzeigevorrichtung (6) über WiFi und/oder Bluetooth verbunden sind.

9. Brandschutzsystem nach einem der vorstehenden Ansprüche, wobei die Datenübertragung zwischen der elektronischen Verarbeitungseinheit (5) und/oder der Anzeigevorrichtung (6) und/oder dem Transmitter (17) über einen internetbasierten Datenspeicherzugriff, zum Beispiel eine Daten-Cloud, eingerichtet ist.

10. Brandschutzsystem nach einem der vorstehenden Ansprüche, wobei das Gehäuse (4) des Brandschutzbunds (2) aus Metall gefertigt ist, wobei das Metallgehäuse (4) einen Durchgang (15) nahe der Position der elektronischen Verarbeitungseinheit (5) aufweist, um sicherzustellen, dass ein kontinuierliches Signal von Elementen des Brandschutzsystems, die sich innerhalb des Metallgehäuses (4) befinden, durch den Durchgang (15) zu Elementen des Brandschutzsystems (1), die sich außerhalb des Metallgehäuses (4) befinden, übertragen werden kann.

## Revendications

1. Un système coupe-feu (1) qui empêche le feu de se propager d'une première pièce (11) dans une deuxième pièce (12), où les première et deuxième pièces (11, 12) sont séparées par une cloison (10), ladite cloison (10) comprenant un passage (9) pour un tuyau (8), le système coupe-feu (1) comprenant un collier coupe-feu (2) destiné à être agencé dans le passage (9) dans la cloison (10), le collier coupe-feu (2) comprenant un matériau intumescent (3) qui est disposé, en cours d'usage, autour de la paroi extérieure du tuyau (8), et le collier coupe-feu (2) comprenant un boîtier (4), de préférence en métal, ledit boîtier étant agencé, en cours d'usage, autour du matériau intumescent (3), ledit boîtier (4) assurant que le matériau intumescent (3) gonfle vers le côté radialement intérieur en cas d'incendie, **caractérisé en ce que** le système coupe-feu (1) comprend en outre une unité de traitement électronique (5), intégrée dans le collier coupe-feu (2), et un appareil d'affichage (6), éloigné du collier coupe-feu (2), ladite unité de traitement électronique (5) comprenant une mémoire (7) pour stocker des données concernant le système coupe-feu (1), ladite unité de traitement électronique (5) et ledit appareil d'affichage (6) étant adaptés pour se connecter l'un à l'autre, soit par câble soit par connexion sans fil, pour transmettre lesdites données de l'unité de traitement électronique (5) à l'appareil d'affichage (6), dans lequel l'appareil d'affichage est conçu pour afficher lesdites données.

2. Un système coupe-feu selon la revendication 1, dans lequel le système coupe-feu (1) comprend en outre au moins un capteur (16) pour mesurer un ou plusieurs paramètres de l'environnement et/ou du collier coupe-feu (2), comme la température, l'humidité ou la pression, ledit capteur (16) et ladite unité de traitement électronique (5) étant adaptés pour être connectés ou pour pouvoir être connectés l'un à l'autre, soit par câble soit par connexion sans fil, pour transmettre lesdits paramètres mesurés du capteur (16) à l'unité de traitement électronique (5).

3. Un système coupe-feu selon la revendication 1 ou 2, dans lequel le système coupe-feu (1) comprend en outre un émetteur (17), éloigné du collier coupe-feu, ledit émetteur (17) pouvant être connecté, soit par câble soit par connexion sans fil, à l'unité de traitement électronique (5) pour transmettre des données provenant de l'émetteur (17) à l'unité de traitement électronique (5), par exemple des données relatives à la dernière inspection, plus particulièrement une date, une heure ou une identification d'un inspecteur.

4. Un système coupe-feu selon la revendication 3, dans lequel l'émetteur (17) et l'appareil d'affichage (6) sont combinés en un seul appareil, de préférence un appareil à main, tel qu'un téléphone portable ou une tablette, de sorte que cet appareil puisse transmettre des données à l'unité de traitement électronique (5), et est également capable de recevoir et d'afficher des données provenant de l'unité de traitement électronique (5) .

5. Un système coupe-feu selon la revendication 1, dans lequel l'unité de traitement électronique (5) du système coupe-feu (1) est capable d'effectuer des opérations sur les données, telles que des calculs ou une réécriture des données.

6. Un système coupe-feu selon l'une des revendications précédentes, dans lequel l'unité de traitement électronique (5) est alimentée par un transducteur (14), ledit transducteur (14) étant de préférence situé au voisinage du collier coupe-feu (2).

7. Un système coupe-feu selon l'une des revendications 1 à 5, dans lequel l'unité de traitement électronique (5) est alimentée par une batterie, de préférence par une batterie rechargeable.

8. Un système coupe-feu selon l'une des revendications précédentes, dans lequel l'unité de traitement électronique (5) et l'appareil d'affichage (6) sont connectés via WIFI et/ou Bluetooth.

9. Un système coupe-feu selon l'une des revendications précédentes, dans lequel la transmission de données entre l'unité de traitement électronique (5) et/ou l'appareil d'affichage (6) et/ou l'émetteur (17) est arrangée via un recours de stockage de données basé sur Internet, par exemple un nuage de données.

10. Un système coupe-feu selon l'une des revendications précédentes, dans lequel le boîtier (4) du collier coupe-feu (2) est en métal, ledit boîtier (4) métallique ayant un passage (15) à proximité de l'emplacement de l'unité de traitement électronique (5), afin de garantir la transmission d'un signal continu à partir d'éléments du système coupe-feu situés à l'intérieur du boîtier (4) métallique, à travers ledit passage (15), vers des éléments du système coupe-feu (1) situés à l'extérieur du boîtier (4) métallique.
